# FASCICULE DE BREVET EUROPEEN

(11) **EP 2 544 938 B1**
(45) Date de publication et mention de la délivrance du brevet: **05.08.2015**
(21) Numéro de dépôt: 11713071.6
(22) Date de dépôt: 08.03.2011
(51) Int. Cl.: B61D 45/00, B61D 47/00, B62D 53/08

(54) **TRAVERSE PORTEUSE AMOVIBLE ÉQUIPÉE D'UNE SELLETTE DE HAUTEUR RÉGLABLE POUR LE SOUTIEN D'UNE SEMI-REMORQUE PENDANT SON CHARGEMENT, SON TRANSPORT FERROVIAIRE ET SON DÉCHARGEMENT**
ENTFERNBARE STÜTZENDE QUERTRÄGER MIT EINEM IN DER HÖHE ANPASSBAREN FÜNFTEN RAD ZUM STÜTZEN EINES SATTELAUFLIEGERS WÄHREND DESSEN BELADUNG, ZUGTRANSPORT UND ENTLADUNG
REMOVABLE SUPPORTING CROSS-MEMBER PROVIDED WITH AN ADJUSTABLE-HEIGHT FIFTH WHEEL FOR SUPPORTING A SEMI-TRAILER DURING THE LOADING, RAIL TRANSPORT AND UNLOADING THEREOF

(30) Priorité: 08.03.2010 FR 1000923
(43) Date de publication de la demande: 16.01.2013
(73) Titulaire: Lohr Industrie, 67980 Hangenbieten (FR)
(72) Inventeur: ANDRE, Jean-Luc, F-67120 Molsheim (FR); OBER, Jacques, F-67000 Strasbourg (FR)
(74) Mandataire: Merckling, Norbert
(86) Numéro de dépôt international: PCT/IB2011/050965
(87) Numéro de publication internationale: WO 2011/110996

(56) Documents cités:
- EP-A2- 0 720 939
- WO-A1-92/04219
- FR-A1- 2 815 005
- FR-A1- 2 884 479
- US-A- 3 183 854

## Description

L'invention se rapporte à une traverse porteuse amovible et manipulable pour le chargement, le déchargement et le transport ferroviaire d'une semi-remorque dans un wagon de transport intermodal selon le préambule de la revendication 1, et le procédé de chargement de cette semi-remorque sur le wagon.

On utilise maintenant de plus en plus fréquemment le transport ferroviaire pour les semi-remorques.

On les charge dans des wagons spéciaux et on les arrime pour garantir leur maintien pendant tout le trajet.

Les semi-remorques sont chargées et déchargées dans des terminaux mixtes routiers et ferroviaires selon différentes techniques.

Une des techniques préférées actuellement consiste à utiliser des wagons à structure ferroviaire porteuse se dissociant des bases roulantes notamment par pivotement soit central soit autour d'une de ses extrémités.

Le pivotement central offre la possibilité d'un accès ou d'une sortie par l'une ou l'autre des extrémités alors que le pivotement autour d'une des extrémités ne laisse qu'une extrémité libre pour l'entrée et la sortie de la semi-remorque avant et après le transport.

D'autres modes d'ouverture sont également possibles, comme par exemple la translation latérale de la structure ferroviaire porteuse ou sa manutention verticale par un engin de levage.

On connaît par le brevet français FR 2884479 au nom de la société ARBEL FAUVET RAIL une nacelle destinée à recevoir une semi-remorque et le wagon équipée d'une telle nacelle.

Selon cette invention un ensemble technique amovible de fixation de la semi-remorque par son pivot d'attelage vient se monter par translation à l'extrémité d'une nacelle de réception d'une semi remorque. Cette nacelle est équipée de deux pistes de roulage et vient reposer par ses bras sur les longerons d'un wagon pour en constituer le fond amovible portant la semi-remorque. Un ensemble technique amovible de fixation comporte un socle sur lequel est solidarisé un pilier ou une colonne portant en partie intermédiaire une traverse et en partie supérieure une sellette d'accouplement du pivot d'attelage de la semi-remorque. Cette traverse présente des fourreaux de réception d'éléments de préhension d'un engin de manutention. Des moyens de verrouillage et de déverrouillage sont en outre prévus.

L'ensemble technique amovible de cette invention ne peut être mis en oeuvre qu'avec des moyens de réception de son socle par engagement à l'extrémité d'une nacelle déposable portée par un wagon dont elle constitue le fond sur lequel repose la semi-remorque pendant son transport.

Au contraire, la présente invention selon la revendication 1 s'applique à tous les types de wagons destinés au transport de semi-remorques sans nécessiter une structure spéciale telle que la nacelle ci-dessus pour les transporter. Elle n'est pas dépendante d'une structure porteuse particulière faisant partie d'un ensemble de moyens spécifiques pour le transport ferroviaire de semi-remorques. Elle vient se monter à l'extrémité d'un wagon sur les éléments classiques de structure de celui-ci et ne requiert aucun moyen supplémentaire spécifique.

A cet effet, elle se rapporte à une traverse porteuse amovible, légère et peu encombrante à sellette intégrée, de hauteur réglable, permettant le déplacement de la semi-remorque, sa mise en place à l'horizontale sur la structure ferroviaire porteuse faisant partie du wagon, son arrimage pour son transport ferroviaire et les opérations inverses lors du déchargement, tout ceci en n'utilisant qu'un simple chariot ou tracteur élévateur ou autre moyen de manutention correctement dimensionné pour les efforts à fournir.

L'un des buts principaux visé par l'invention est de pouvoir transporter à l'horizontale dans un wagon toute semi-remorque grâce à un ensemble et un mécanisme simples permettant de régler rapidement la distance de la sellette par rapport au corps de la traverse à savoir la hauteur de cette dernière par rapport au sol et ceci préalablement au chargement de la semi-remorque sur le wagon. A cet effet, l'ensemble amovible formé par la sellette et son support doit présenter l'épaisseur la plus faible possible ainsi qu'une facilité et une rapidité de mise en oeuvre intéressantes.

D'autres caractéristiques et avantages de l'invention apparaîtront dans la description qui suit, donnée à titre d'exemple et accompagnée des dessins dans lesquels :
- la figure 1 est une vue en perspective de l'avant de la traverse porteuse selon l'invention,
- la figure 2 est une vue en perspective de l'avant de la traverse porteuse selon l'invention en position de transport c'est-à-dire posée sur l'extrémité d'une structure ferroviaire porteuse,

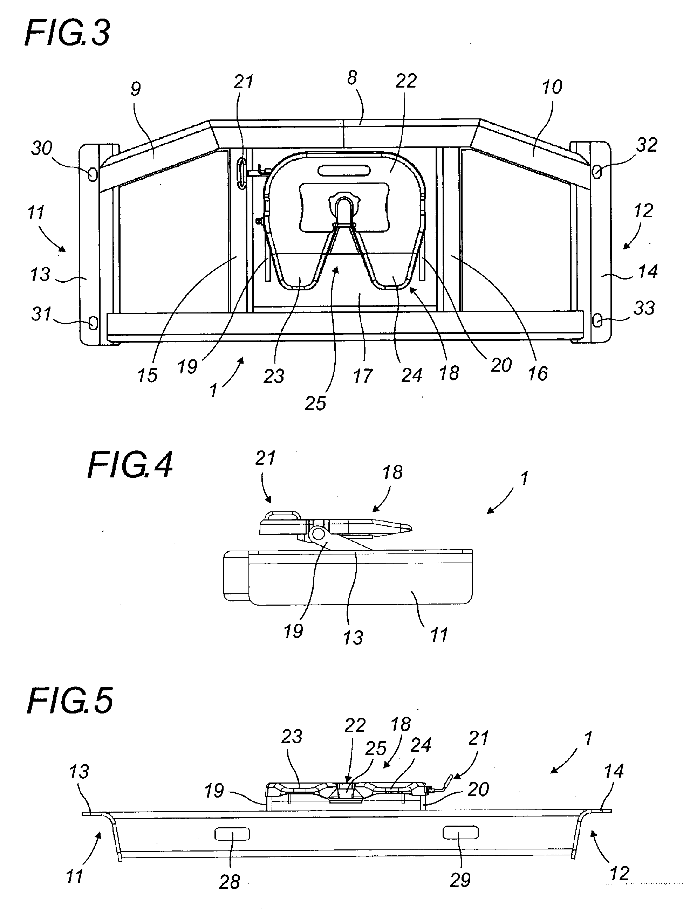

- la figure 3 est une vue de dessus en plan de la traverse porteuse selon l'invention,
- la figure 4 est une vue de profil de la traverse porteuse selon l'invention montrant la sellette,
- la figure 5 est une vue de l'arrière de la traverse porteuse selon l'invention montrant les ouvertures pour la fourche de l'élévateur,
- la figure 6 est une vue en perspective de l'arrière de la traverse porteuse en place sur une structure porteuse ferroviaire,
- la figure 7 est une vue de profil d'une partie de la figure 6,
- les figures 8 à 15 sont des vues schématiques successives de la mise en oeuvre de la traverse porteuse selon l'invention dans lesquelles,

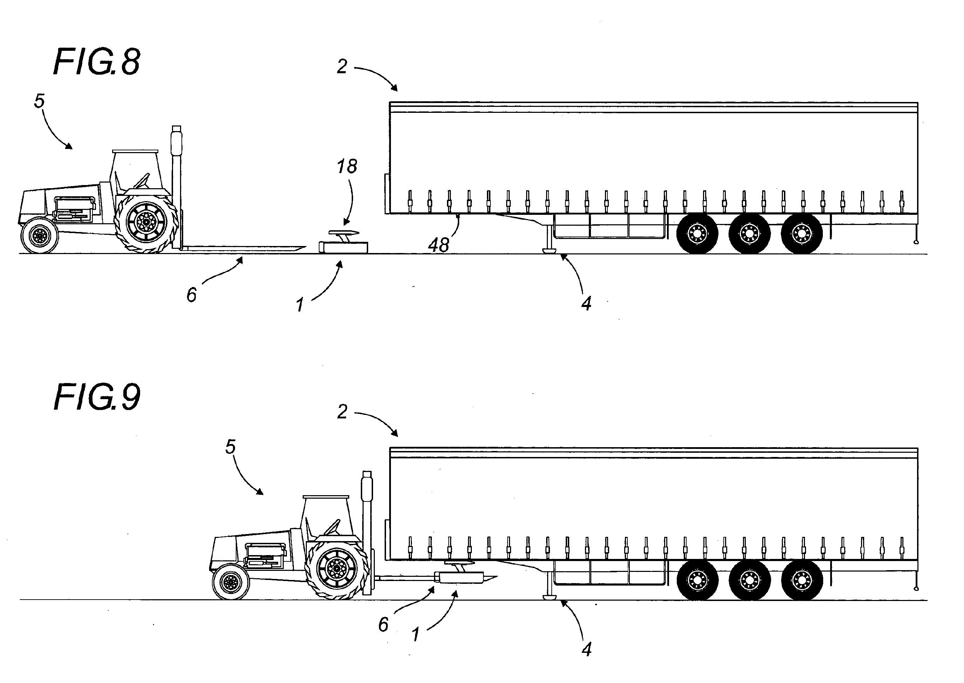

   - la figure 8 montre la prise de la traverse à terre par un chariot élévateur, une semi-remorque se trouvant à proximité à l'arrêt sur ses béquilles,
   - la figure 9 illustre la mise en place de la traverse sur le pivot d'attelage de la semi-remorque reposant sur ses béquilles ;

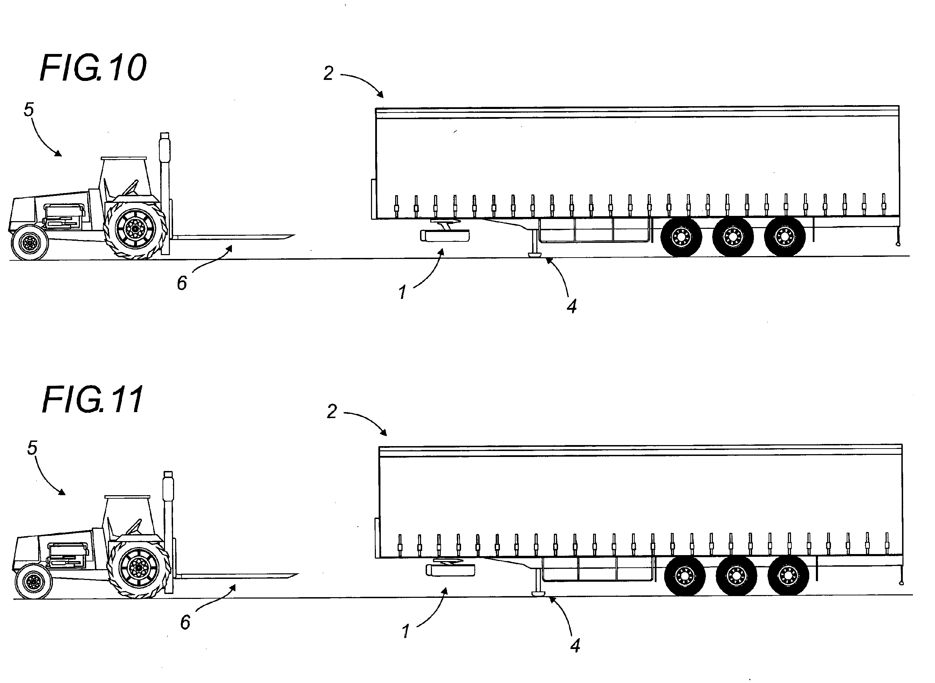

   - les figures 10 et 11 illustrent une première variante de l'opération de réglage de la hauteur de la sellette n'utilisant pas le chariot élévateur, le chariot avançant pour libérer la traverse à la figure 10 et l'opérateur réglant la hauteur de la sellette au moyen d'un mécanisme propre à la traverse sur la figure 11 ;

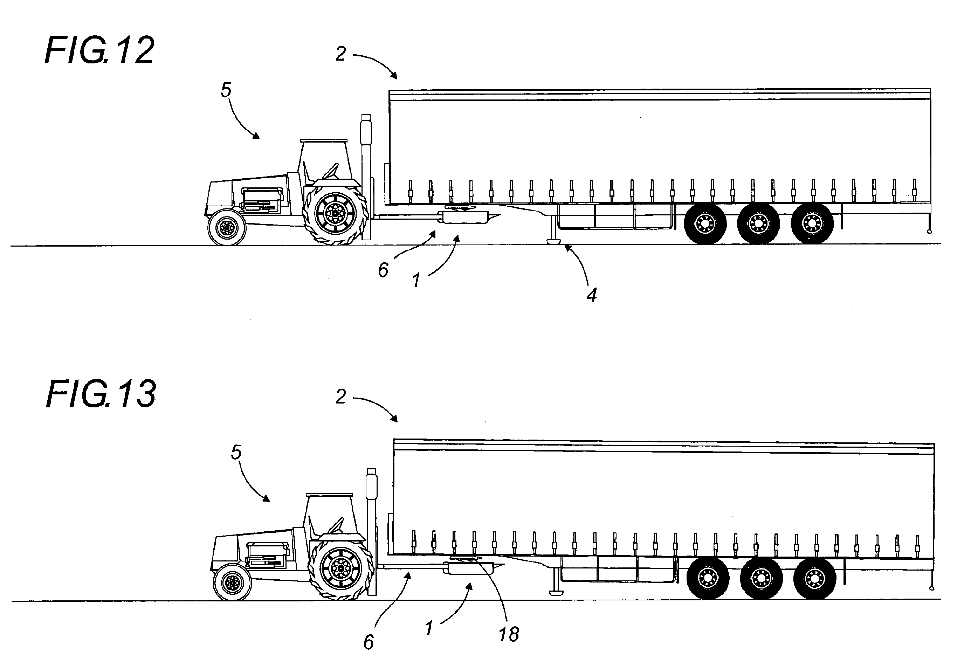

   - la figure 12 illustre une deuxième variante de l'opération de réglage de la hauteur de la sellette s'effectuant cette fois au moyen du chariot élévateur,
   - la figure 13 illustre le transport à l'aide du chariot élévateur de la semi-remorque en position légèrement inclinée pour ne plus reposer sur ses béquilles,

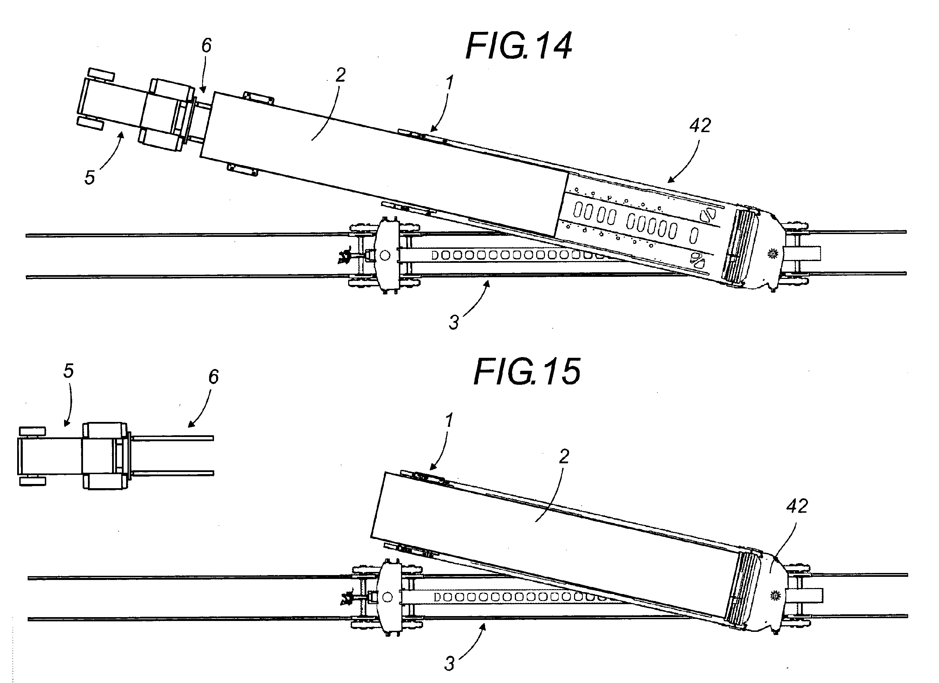

   - la figure 14 est une vue en plan qui représente la semi-remorque en cours de chargement,
   - la figure 15 est une vue en plan lorsque la semi-remorque se trouve en place en position de transport, la traverse porteuse en appui sur les éléments longitudinaux de flanc de la structure ferroviaire porteuse.

La traverse porteuse 1 selon l'invention est destinée à servir de support temporaire pour la manipulation d'une semi-remorque 2 à transporter dans un wagon 3 de transport notamment intermodal et pour son blocage dans toutes les directions lors du transport ferroviaire.

Les manoeuvres de déplacement de la semi-remorque 2, de son point de stationnement où elle repose sur ses béquilles 4 jusqu'au wagon 3, s'effectuent à l'aide d'un chariot ou tracteur élévateur 5 de type classique c'est-à-dire à fourche 6. Ce genre de tracteur ou de chariot élévateur existe de façon courante dans les zones portuaires.

D'autres engins de manutention sont également possibles, tels qu'une grue portuaire ou un autre engin de levage de type grue ou palonnier par exemple.

La traverse porteuse 1 amovible et manipulable selon l'invention est une structure peu épaisse et relativement plane à la manière d'une palette bien connue pour supporter des marchandises et est entièrement manipulable par un chariot ou tracteur élévateur 5 à fourche classique ou autre correctement dimensionné pour les efforts à fournir.

Le corps de la traverse 1 est de préférence une structure métallique nervurée ou en cadre mécano-soudé de forme générale périmétrique rectangulaire, par exemple à grand côté arrière rectiligne 7 et à côté avant en segment droit central 8 prolongé de chaque côté par un segment oblique 9 et 10 rejoignant chacun un profilé plat de bordure latérale 11 et 12 préférentiellement de section en L inversé formant chacun une équerre de calage avec un rebord plat d'appui 13 et 14. Les profilés formant les grands côtés avant et arrière sont par exemple de section en C.

La traverse 1 comporte de préférence deux profilés intérieurs de rigidification 15 et 16 qui délimitent un espace central 17 occupé par une sellette 18. La sellette 18 est préférentiellement montée pivotante autour d'un axe transversal horizontal et portée par l'intermédiaire de deux leviers ou biellettes inclinés 19 et 20 montés par exemple eux-mêmes pivotants ou autrement sur les profilés intérieurs 15 et 16. La sellette 18 peut être verrouillée par un verrou classique par exemple actionné par une poignée 21 et déplacée et verrouillée en hauteur par un mécanisme d'élévation non représenté.

La sellette 18 est de type connu compatible avec le pivot d'attelage 48 des semi-remorques à charger et il s'agit de façon générale d'une sellette normalisée.

Cette sellette 18 est l'équivalent de celle existant sur les tracteurs routiers auxquels sont accouplées les semi-remorques à transporter.

La sellette 18 présente une plage d'appui 22 débutant par deux rampes inclinées 23 et 24 délimitant entre elles une zone d'entrée 25 en V pour le pivot d'attelage 48 de la semi-remorque 2.

La sellette 18 est montée réglable en hauteur par rapport au corps de la traverse 1 par un mécanisme classique de relevage non représenté. Ce mécanisme de relevage permet un réglage en hauteur de la sellette 18. Ce mécanisme de relevage et de réglage peut être prévu actionnable par un opérateur, par exemple par le côté, comme dans la variante de l'opération de réglage illustrée sur les figures 10 et 11. Il peut également être conçu pour être actionné par une modification de la hauteur de la fourche 6 du chariot élévateur 5 comme dans la variante illustrée par la figure 12, ou par tout autre moyen équivalent de l'engin de manutention utilisé.

Ce mécanisme est verrouillé automatiquement pour reprendre tous les efforts verticaux provenant de la semi-remorque 2. Le pivot d'attelage 48 repris par la sellette 18 est bloqué dans toutes les directions. La traverse 1, le mécanisme de support de la sellette 18 et la sellette elle même assurent le maintien de la semi-remorque 2 lors des opérations de manutention et lors du transport ferroviaire au cours duquel la traverse 1 se trouve en appui sur les chants supérieurs de la structure ferroviaire porteuse et immobilisée sur ceux-ci comme on le verra ci-dessous.

Dans le mode de réalisation représenté, la traverse porteuse 1 présente en outre sur le grand côté avant deux ouvertures avant 26 et 27 calibrées et préférentiellement symétriques par rapport au plan longitudinal médian pour le passage des bras de la fourche 6 du tracteur ou du chariot élévateur 5. Ces ouvertures avant sont de préférence complétées par deux ouvertures arrière identiques 28 et 29.

Les bras de la fourche 6 peuvent ainsi prendre appui sur ces ouvertures 26 à 29 lors des mouvements verticaux.

Comme déjà indiqué, d'autres engins de manutention sont possibles. L'interface mécanique entre les moyens de préhension de ces engins et la traverse peut naturellement être modifiée en fonction du type d'engin de manutention.

Dans le cas par exemple, d'une grue portuaire, les ouvertures 26 à 29 servant de passages pour les bras de la fourche 6 de l'élévateur 5 peuvent être remplacés par des anneaux de reprise pour les élingues.

D'autres interfaces peuvent exister sur cette traverse pour permettre l'utilisation de divers engins de manutention.

Selon un mode de réalisation préféré, les profilés 11 et 12 de bordure latérale formant les traverses d'extrémité présentent chacun deux ouvertures d'immobilisation 30, 31 et 32, 33, que des saillies ou chevilles d'immobilisation 34, 35 et 36, 37 existant sur le wagon 3 viendront traverser.

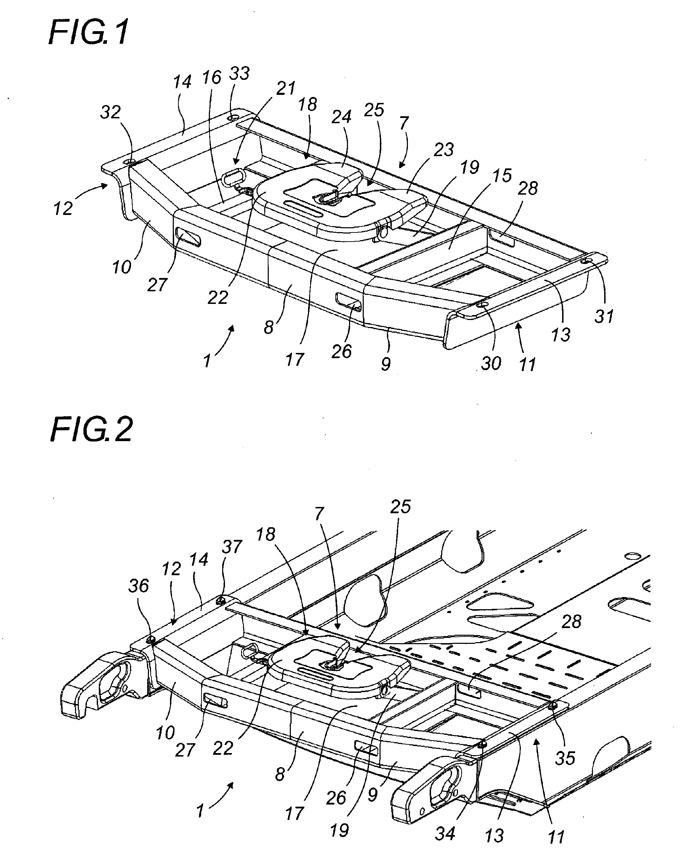

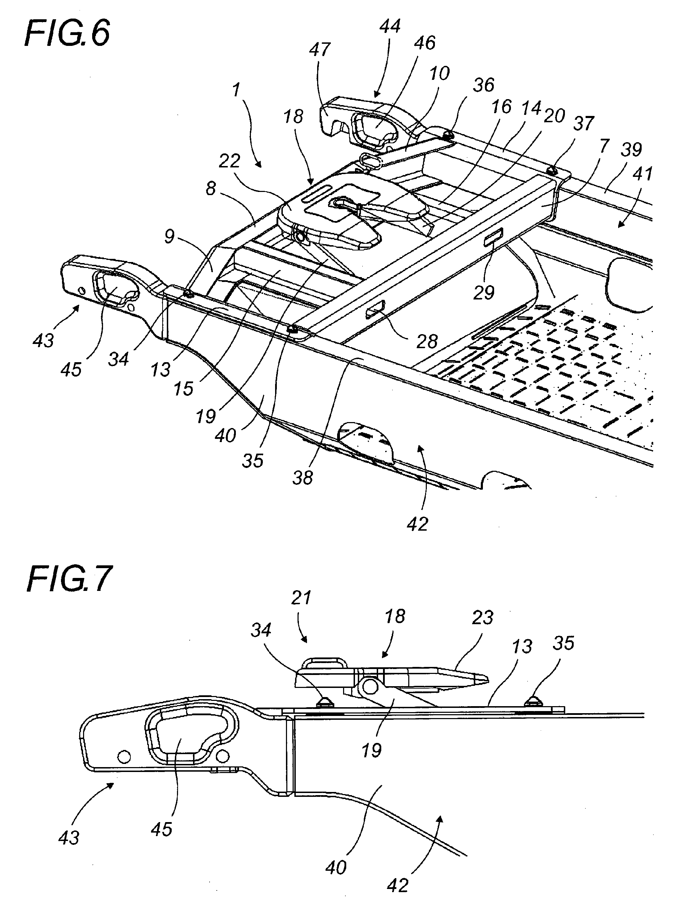

Ces saillies 34 à 37 visibles sur les figures 2, 6 et 7 sont solidarisées aux chants supérieurs 38 et 39 des éléments longitudinaux droit 40 et gauche 41 de flanc d'une structure ferroviaire porteuse 42 pivotant par une de ses extrémités dont un exemple de réalisation non limitatif, a été représenté sur les figures 2 et 6. La structure ferroviaire 42 présente deux extrémités avant 43 et 44 à ouvertures 45 et 46 et à structures terminales conformées en crochet 47.

Les saillies 34 à 37 sont accessibles par le dessus.

Elles peuvent bien entendu être constituées de blocs mécaniques amovibles ou reliés aux chants supérieurs 38, 39 par charnière ou autre articulation ou moyen de fixation temporaire ou être montées sur ces chants d'une autre façon.

Ces saillies 34 à 37 peuvent comporter une fonction de verrouillage comme par exemple, des verrous à broche ou tournants. Ces saillies garantissent l'immobilisation et le maintien de l'avant de la remorque pendant tout le transport.

Les saillies 34 à 37 peuvent être de simples pièces ou des éléments à verrous intégrés par exemple du type verrous tournants utilisés pour la fixation des conteneurs ISO.

D'autres moyens d'immobilisation de la traverse 1 sur la structure ferroviaire porteuse 42 peuvent évidemment être imaginés par l'homme du métier sans sortir du cadre de la présente invention. Les saillies 34 à 37 de la structure ferroviaire porteuse 42 peuvent ainsi par exemple être remplacées par des doigts ou crochets de verrouillage de nature quelconque, et les ouvertures 30 à 33 de la traverse 1 par des anneaux ou des cavités d'immobilisation de forme quelconque.

De même, les ouvertures et les saillies d'immobilisation peuvent être inversées, la traverse 1 portant des saillies, chevilles, doigts, crochets ou autres structures saillantes d'immobilisation et la structure ferroviaire porteuse 42 présentant des ouvertures ou cavités d'immobilisation dans lesquelles les structures saillantes d'immobilisation de la traverse sont susceptibles de s'engager.

Tout autre moyen approprié d'immobilisation de la traverse 1 sur la structure ferroviaire porteuse 42 et plus généralement sur une structure de wagon au niveau d'une de ses extrémités pourra être envisagé.

Pour faciliter la pose de la traverse 1, on peut avantageusement prévoir des repères et une butée (non représentés) sur chacun des chants supérieurs 38, 39 des éléments longitudinaux de flanc 40, 41 de la structure ferroviaire porteuse 42 à un niveau approprié ainsi que des structures d'autocentrage.

Il est évidemment possible de monter la traverse 1 sur tout autre élément de structure situé à l'extrémité du wagon.

On décrira maintenant, en référence aux figures 8 à 15, une phase de chargement d'une semi-remorque 2 utilisant la traverse porteuse 1 selon l'invention.

La semi-remorque 2 est abandonnée par son tracteur en attente de chargement sur une aire de stationnement. Sa partie avant repose sur ses béquilles 4.

La traverse porteuse 1, venue d'un autre chargement ou de son endroit de stockage, est posée sur le sol ou se trouve déjà enfourchée par le chariot ou tracteur élévateur 5. Ce dernier soulève la traverse 1 en engageant les bras de sa fourche 6 dans les ouvertures avant 26, 27 puis arrière 28, 29 de la traverse 1. Il la porte à une hauteur adaptée pour son montage sur le pivot d'attelage 48. Cette opération ne requiert pas une grande habileté en raison du convergent de la zone d'entrée 25 de la sellette 18. Le pivot d'attelage 48 de la semi-remorque 2 est verrouillé dans la sellette 18 comme pour sa liaison articulée avec le tracteur.

L'opérateur règle soit manuellement (figures 10 et 11), soit en actionnant le mécanisme élévateur à fourche 6 du tracteur 5 (figure 12), la hauteur de la traverse 1 par rapport au sol, ou l'écartement entre le corps de la traverse 1 et la sellette 18 de manière à obtenir la distance correcte et nécessaire pour que la semi-remorque 2 se trouve approximativement horizontale dans sa position de transport dans le wagon 3 prévu à cet effet. Ce réglage s'effectue en agissant sur le mécanisme de liaison appelé ci-dessus mécanisme d'élévation existant entre la sellette 18 et la traverse 1, action qui procure une variation d'écartement entre eux et donc de position verticale de la traverse 1 par rapport au sol.

Ensuite, l'avant de la semi-remorque 2 est soulevé pour libérer les béquilles 4 de leur appui sur le sol (figure 13). La semi-remorque 2 est tirée par le chariot élévateur 5 et placée par sa partie arrière en face de l'extrémité de la structure porteuse 42 en position pivotée ouverte du wagon 3 dans lequel elle monte en marche arrière sous la poussée du chariot élévateur 5 (figure 14).

Dans un autre mode de chargement, par exemple dans le cas d'une structure ferroviaire ouverte à ses deux extrémités, le chariot peut la traverser en long en tirant la semi-remorque.

Arrivée en face des repères et contre la butée d'arrêt (non représentés) sur chaque chant supérieur 38, 39 des éléments longitudinaux de flanc 40, 41 de la structure ferroviaire porteuse 42, la traverse porteuse 1 est centrée à l'aide de formes convergentes pour que ses ouvertures d'immobilisation 30 à 33 arrivent en face des saillies d'immobilisation 34 à 37 de la structure ferroviaire porteuse 42. Un très léger mouvement d'abaissement permet à la traverse 1 de venir reposer sur les chants supérieurs 38, 39 de la structure ferroviaire porteuse 42 par le plat de chacun de ses profilés de bordure latérale 11, 12. Le cas échéant, on verrouille celle-ci au niveau des ouvertures par les verrous tournants ou autres.

Dans cet état, la semi-remorque 2 se trouve correctement centrée dans la structure ferroviaire porteuse 42, en appui vertical sur ses roues et sur la sellette 18, en position horizontale ou quasi horizontale. Les béquilles 4 sont soulagées et la semi-remorque 2 est verrouillée dans toutes les directions conformément au règlement en vigueur.

Ensuite ou avant le verrouillage, on dégage la fourche 6 hors de la traverse 1 par une marche avant du tracteur élévateur 5. Celui-ci est rendu disponible pour une nouvelle opération de chargement ou de déchargement (figure 15).

Le wagon 3 est ensuite fermé par le pivotement de la structure ferroviaire porteuse 42 et se trouve prêt au départ. Une fois le wagon fermé, la semi-remorque respecte le gabarit ferroviaire.

Le déchargement s'effectue en procédant par ordre inverse dans toutes les opérations ci-dessus.

Comme déjà indiqué, d'autres modes et engins de manutention sont également possibles, les opérations ci-dessus s'effectuant à peu près de la même manière.

## Revendications

1. Traverse porteuse (1) amovible et manipulable par un engin de manutention pour réaliser le chargement, le déchargement et l'arrimage d'une semi-remorque (2) sur une structure ferroviaire porteuse (42) fixe, amovible ou mobile d'un wagon (3) de transport ferroviaire, la traverse porteuse (1) comprenant un corps et un support de réception du type sellette (18) adaptée pour recevoir le pivot d'attelage (48) de la semi-remorque (2), et pour assurer son maintien pendant sa manipulation et son transport ferroviaire, la traverse (1) comprenant une interface mécanique de préhension (26, 27, 28, 29) la rendant manipulable par un engin de manutention (5) est comportant :
. un corps sensiblement plat formé d'une structure métallique de base portant une sellette relevable (18),
. un mécanisme de positionnement en élévation de la sellette (18) par rapport au corps de la traverse (1),
. un moyen de verrouillage en position de la sellette par rapport au corps de la traverse (1),
. au moins un moyen d'immobilisation ou de retenue (30, 31, 32, 33) de la traverse (1) sur la structure ferroviaire porteuse (42), **caractérisé en ce que** la traverse comporte
. une bordure latérale (11, 12) située de chaque côté de la traverse (1) servant de moyen d'appui sur les éléments longitudinaux de flanc de la structure ferroviaire porteuse (42).

2. Traverse porteuse (1) selon la revendication 1 **caractérisé en ce que** la structure métallique est formée de profilés nervurés ou d'un cadre mécano-soudé de forme générale périmétrique rectangulaire.

3. Traverse porteuse (1) selon la revendication 2 **caractérisée en ce que** son corps comprend un grand côté arrière rectiligne (7) et un côté avant en segment droit central (8) prolongé de chaque côté par un segment oblique (9, 10) rejoignant chacun un profilé plat de bordure latérale (11, 12).

4. Traverse porteuse (1) selon la revendication 3 **caractérisée en ce que** le grand côté arrière (7) et le côté avant (8, 9, 10) sont réalisés par des profilés à section en C et **en ce que** les profilés plats de bordure latérale (11, 12) présentent une section en L inversé.

5. Traverse porteuse (1) selon l'une quelconque des revendications précédentes **caractérisée en ce qu'**elle comporte en outre deux profilés intérieurs de rigidification (15, 16) qui délimitent un espace central (17) pour la sellette (18).

6. Traverse porteuse (1) selon la revendication 1 ou 5 **caractérisée en ce que** la sellette (18) est pivotante autour d'un axe transversal horizontal et montée sur deux leviers ou biellettes inclinés (19, 20) faisant partie d'un mécanisme de relevage de la sellette.

7. Traverse porteuse (1) selon l'une quelconque des revendications précédentes **caractérisée en ce que** la sellette (18) présente une plage d'appui (22) qui débute par deux rampes inclinées (23, 24) délimitant entre elles une zone d'entrée (25) en V pour le pivot d'attelage (48) de la semi-remorque (2).

8. Traverse porteuse (1) selon l'une quelconque des revendications précédentes **caractérisée en ce que** l'interface mécanique de préhension est une série d'ouvertures (26, 27, 28, 29) compatibles avec la fourche (6) d'un élévateur à fourche (5) ou un ensemble d'anneaux ou autre moyen de reprise compatibles avec les élingues d'une grue ou les organes de préhension d'un palonnier.

9. Traverse porteuse (1) selon l'une quelconque des revendications précédentes **caractérisée en ce que** le mécanisme de positionnement en élévation de la sellette (18) est actionnable par un opérateur ou au moyen de l'engin de manutention.

10. Traverse porteuse (1) selon l'une quelconque des revendications précédentes **caractérisée en ce que** le mécanisme de positionnement en élévation de la sellette (18) est verrouillé automatiquement ou par un verrou actionné au moyen d'une poignée (21), pour reprendre les efforts verticaux provenant de la semi-remorque (2) lorsque son pivot d'attelage (48) est engagé dans la sellette (18).

11. Traverse porteuse (1) selon la revendication 1 **caractérisée en ce qu'**au moins un moyen d'immobilisation est un moyen de calage.

12. Traverse porteuse (1) selon la revendication 1 **caractérisée en ce qu'**elle comporte un moyen de centrage du corps de la traverse sur le wagon,

13. Traverse porteuse (1) selon la revendication 1 **caractérisée en ce que** la bordure latérale (11,12) est un moyen d'appui sur les chants supérieurs (38, 39) des éléments longitudinaux de flanc de la structure ferroviaire porteuse (42).

14. Traverse porteuse (1) selon la revendication précédente **caractérisée en ce que** la bordure latérale (11,12) est un profilé (12, 13) de section en L inversé constituant une équerre de calage à rebord plat d'appui (13, 14).

15. Traverse porteuse (1) selon l'une quelconque des revendications précédentes **caractérisée en ce que** le moyen d'immobilisation ou de retenue de la traverse (1) sur la structure ferroviaire porteuse (42) comprend un ensemble d'ouvertures d'immobilisation ou de retenue (30, 31, 32, 33), d'anneaux, de cavités d'immobilisation, de saillies, de chevilles, de doigts, de crochets ou de structures saillantes d'immobilisation susceptibles de coopérer avec des structures complémentaires portées par la structure ferroviaire porteuse (42).

16. Traverse porteuse (1) selon l'une quelconque des revendications précédentes **caractérisée en ce qu'**elle comporte un moyen de verrouillage de la traverse (1) sur la structure ferroviaire porteuse (42) qui complète le moyen d'immobilisation ou de retenue (30, 31, 32, 33).

17. Traverse porteuse (1) selon la revendication 16 **caractérisée en ce que** le moyen de verrouillage comprend un ou plusieurs verrous à broche ou tournants.

18. Procédé de chargement d'une semi-remorque sur un wagon utilisant les moyens selon l'une quelconque des revendications ci-dessus **caractérisé en ce que** la semi-remorque (2) abandonnée par son tracteur routier et en attente de chargement sur une aire de stationnement, sa partie avant reposant sur ses béquilles (4), la traverse porteuse (1) venue d'un autre chargement ou de son endroit de stockage, est posée sur le sol ou se trouve déjà enfourchée par un chariot ou tracteur élévateur (5) ou autre engin de manutention qui soulève la traverse (1) en engageant les bras de sa fourche (6) dans les ouvertures avant (26) et (27) puis arrière (28) et (29) de la traverse (1) **en ce que** l'engin la porte à une hauteur adaptée pour son montage sur le pivot d'attelage (48), **en ce que** l'opérateur règle soit manuellement, soit en actionnant le mécanisme élévateur à fourche (6) du tracteur élévateur (5), la hauteur de la traverse (1) par rapport au sol, ou l'écartement entre le corps de la traverse (1) et la sellette (18) de manière à obtenir la distance correcte et nécessaire pour que la semi-remorque (2) se trouve approximativement horizontale dans sa position de transport dans le wagon (3) prévu à cet effet, et **en ce que** ce réglage s'effectue en agissant sur le mécanisme de relevage de la sellette (18) existant entre la sellette (18) et la traverse (1), et **en ce que**, l'avant de la semi-remorque (2) est soulevé pour libérer les béquilles (4) de leur appui sur le sol, **en ce que** la semi-remorque (2) est tirée par le chariot élévateur (5) et placée par sa partie arrière en face de l'extrémité de la structure porteuse (42) du wagon (3) en position ouverte du wagon (3) dans lequel elle monte en marche arrière sous la poussée du chariot élévateur (5) en ce qu'arrivée en face de repères et contre une butée d'arrêt sur chaque chant supérieur (38) et (39) des éléments longitudinaux de flanc (40) et (41) de la structure ferroviaire porteuse (42), la traverse porteuse (1) est centrée pour que ses ouvertures d'immobilisation (30) à (33) arrivent en face des saillies d'immobilisation (34) à (37) de la structure ferroviaire porteuse (42), qu'un très léger mouvement d'abaissement permet à la traverse (1) de venir reposer sur les chants supérieurs (38) et (39) de la structure ferroviaire porteuse (42) par le plat de chacun de ses profilés de bordure latérale (11) et (12) et que l'on verrouille celle-ci au niveau des ouvertures par les verrous tournants ou autres et qu'ensuite on soulage les béquilles (4) et la semi-remorque (2) est verrouillée dans toutes les directions conformément au règlement en vigueur et qu'ensuite on dégage la fourche (6) hors de la traverse (1) par une marche avant du tracteur élévateur (5), celui-ci devenant disponible pour une nouvelle opération de chargement.

## Patentansprüche

1. Abnehmbare und durch ein Umschlaggerät handhabbare Trägertraverse (1) zur Realisierung des Beladens, des Entladens und der Verzerrung eines Sattelanhängers (2) auf einer festen, abnehmbaren oder mobilen tragenden Eisenbahnstruktur (42) eines Eisenbahntransportwaggons (3), wobei die Trägertraverse (1) einen Körper auf einem Aufnahmeträger vom Typ Aufsattel (18) umfasst, der geeignet ist, um den Sattelzapfen (48) des Sattelanhängers (2) aufzunehmen, und um sein Festhalten während seiner Handhabung und seines Eisenbahntransports zu gewährleisten, wobei die Traverse (1) eine mechanische Greiferschnittstelle (26, 27, 28, 29) umfasst, die sie durch ein Umschlaggerät (5) handhabbar macht und umfasst:
• einen deutlich flachen, aus einer Basismetallstruktur geformten Körper, der einen anhebbaren Aufsattel (18) trägt,
• einen Positionierungsmechanismus zum Anheben des Aufsattels (18) im Verhältnis zum Körper der Traverse (1),
• ein Verriegelungsmittel des Aufsattels in dessen Position im Verhältnis zum Körper der Traverse (1),
• wenigstens ein Feststell- oder Rückhaltemittel (30, 31, 32, 33) der Traverse (1) auf der tragenden Eisenbahnstruktur (42), **dadurch gekennzeichnet, dass** die Traverse umfasst:
• einen lateralen Rand (11, 12), der sich auf jeder Seite der Traverse (1) befindet, der als Stützmittel auf den länglichen Elementen der Flanke der tragenden Eisenbahnstruktur (42) befindet.

2. Trägertraverse (1) gemäß Anspruch 1, **dadurch gekennzeichnet, dass** die Metallstruktur aus gerippten Profilen oder einem mechanisch verschweißten Rahmen in allgemeiner umlaufender rechteckiger Form gebildet ist.

3. Trägertraverse (1) gemäß Anspruch 2, **dadurch gekennzeichnet, dass** ihr Körper eine große, hintere, rechteckige Seite (7) und eine vordere Seite im zentralen geraden Segment (8) umfasst, das auf jeder Seite durch ein schräges Segment (9, 10) verlängert ist, die jeweils ein flaches Profil mit lateralem Rand (11, 12) erreicht.

4. Trägertraverse (1) gemäß Anspruch 3, **dadurch gekennzeichnet, dass** die große hintere Seite (7) und die vordere Seite (8, 9, 10) durch Profile mit C-förmigem Querschnitt realisiert sind und dass die flachen Profile mit lateralem Rand (11, 12) einen Querschnitt in umgekehrter L-Form aufweisen.

5. Trägertraverse (1) gemäß irgendeinem der voranstehenden Ansprüche, **dadurch gekennzeichnet, dass** sie darüber hinaus zwei interne Versteifungsprofile (15, 16) umfasst, die einen zentralen Raum (17) für den Aufsattel (18) begrenzen.

6. Trägertraverse (1) gemäß Anspruch 1 oder 5, **dadurch gekennzeichnet, dass** der Aufsattel (18) um eine transversale, horizontale Achse schwenkbar ist und auf zwei geneigten Hebeln oder Schwingarmen (19, 20) montiert ist, die zu einem Anhebemechanismus des Aufsattels gehören.

7. Trägertraverse (1) gemäß irgendeinem der voranstehenden Ansprüche, **dadurch gekennzeichnet, dass** der Aufsattel (18) einen Stützbereich (22) aufweist, der durch zwei geneigte Rampen (23, 24) beginnt, welche untereinander einen V-förmigen Eingangsbereich (25) für den Sattelzapfen (48) des Sattelanhängers (2) begrenzen.

8. Trägertraverse (1) gemäß irgendeinem der voranstehenden Ansprüche, **dadurch gekennzeichnet, dass** die mechanische Greiferschnittstelle eine Serie von Öffnungen (26, 27, 28, 29) ist, die mit der Gabel (6) eines Gabelstaplers (5) oder einer Gruppe von Ringen oder sonstigen Aufnahmemitteln kompatibel sind, welche mit den Schlingen eines Krans oder der Greiferorgane einer Krantraverse kompatibel sind.

9. Trägertraverse (1) gemäß irgendeinem der voranstehenden Ansprüche, **dadurch gekennzeichnet, dass** der Positionierungsmechanismus des Aufsattels (18) in der Höhe durch einen Operator oder mittels des Umschlaggeräts betätigbar ist.

10. Trägertraverse (1) gemäß irgendeinem der voranstehenden Ansprüche, **dadurch gekennzeichnet, dass** der Positionierungsmechanismus des Aufsattels (18) in der Höhe automatisch oder durch einen Riegel verriegelt wird, der mittels eines Handgriffs (21) betätigt wird, um die aus dem Sattelanhänger (2) stammenden vertikalen Beanspruchungen wieder aufzunehmen, wenn der Sattelzapfen (18) eingerastet ist.

11. Trägertraverse (1) gemäß Anspruch 1, **dadurch gekennzeichnet, dass** wenigstens ein Feststellmittel ein Verkeilungsmittel ist.

12. Trägertraverse (1) gemäß Anspruch 1, **dadurch gekennzeichnet, dass** sie ein Zentrierungsmittel des Körpers der Traverse auf dem Waggon umfasst.

13. Trägertraverse (1) gemäß Anspruch 1, **dadurch gekennzeichnet, dass** der laterale Rand (11, 12) ein Stützmittel auf den oberen Kanten (38, 39) der länglichen Elemente der Flanken der Eisenbahnträgerstruktur (42) ist.

14. Trägertraverse (1) gemäß dem voranstehenden Anspruch, **dadurch gekennzeichnet, dass** der laterale Rand (11, 12) ein Profil (12, 13) mit umgekehrtem L-förmigem Querschnitt ist, der einen Verkeilungswinkel mit flachem Aufstützarm (13, 14) bildet.

15. Trägertraverse (1) gemäß irgendeinem der voranstehenden Ansprüche, **dadurch gekennzeichnet, dass** das Feststell- oder Rückhaltemittel der Traverse (1) auf der tragenden Eisenbahnstruktur (42) eine Gruppe von Öffnungs-, Feststell- oder Rückhaltemitteln (30, 31, 32, 33), Ringen, Feststellausnehmungen, Vorsprüngen, Dübeln, Fingern, Haken oder hervorstehenden Feststellstrukturen umfasst, die mit komplementären Strukturen zusammenwirken können, die von der Eisenbahnträgerstruktur (42) getragen werden.

16. Trägertraverse (1) gemäß irgendeinem der voranstehenden Ansprüche, **dadurch gekennzeichnet, dass** sie ein Verriegelungsmittel der Traverse (1) auf der tragenden Eisenbahnstruktur (42) umfasst, die das Feststell- oder Rückhaltemittel (30, 31, 32, 33) vervollständigt.

17. Trägertraverse (1) gemäß Anspruch 16, **dadurch gekennzeichnet, dass** das Verriegelungsmittel einen oder mehrere Spindel- oder Wenderiegel umfasst.

18. Ladeverfahren eines Sattelanhängers auf einen Waggon unter Verwendung der Mittel gemäß irgendeinem der voranstehenden Ansprüche, **dadurch gekennzeichnet, dass** der von seiner Straßenzugmaschine abgehängte Sattelanhänger (2), der auf einem Parkbereich auf die Beladung wartet, wobei sein vorderer Teil auf seinen Ständern (4) ruht, die Trägertraverse (1), die aus einer anderen Beladung oder von ihrem Lagerort stammt, auf dem Boden abgelegt ist oder bereits durch einen Hubwagen oder Gabelstapler (5) oder sonstigen Förderer aufgegabelt ist, der die Traverse (1) anhebt, indem die Arme der Gabel (6) in die vorderen (26) und (27), dann die hinteren (28) und (29) Öffnungen der Traverse (1) eingreifen, dass der Förderer sie in eine für die Montage auf dem Sattelzapfen (48) geeignete Höhe trägt, dass der Operator die Höhe der Traverse (1) im Verhältnis zum Boden oder die Beabstandung zwischen dem Körper der Traverse (1) und dem Aufsattel (18) derart entweder manuell oder durch Betätigen des Hebemechanismus der Gabel (6) des Gabelstaplers (5) einstellt, dass die richtige und notwendige Entfernung erhalten wird, damit der Sattelanhänger (2) sich ungefähr horizontal in seiner Transportposition in dem zu diesem Zweck vorgesehenen Waggon (3) befindet und dass diese Einstellung durch Einwirkung auf den Anhebemechanismus des Aufsattels (18) erfolgt, der zwischen dem Aufsattel (18) und der Traverse (1) vorhanden ist, und dass das Vorderteil des Sattelanhängers (2) angehoben wird, um die Ständer (4) ihrer Stütze auf dem Boden freizugeben, dass der Sattelanhänger (2) durch den Hubwagen (5) gezogen und durch seinen hinteren Teil gegenüber dem Ende der Trägerstruktur (42) des Waggons in offener Position des Waggons (3) platziert wird, in dem er im Rückwärtsgang unter dem Schub des Gabelstaplers (5) einfährt, dass gegenüber den Markierungen und gegen einen Endanschlag auf jeder oberen Kante (38) und (39) der länglichen Elemente der Flanke (40) und (41) der Eisenbahnträgerstruktur (42) die Trägertraverse (1) zentriert ist, damit ihre Feststellöffnungen (30) bis (33) gegenüber den Feststellvorsprüngen (34) bis (37) der Eisenbahnträgerstruktur (42) ankommen, dass eine sehr leichte Absenkbewegung es der Traverse (1) ermöglicht, auf den oberen Kanten (38) und (39) der Eisenbahnträgerstruktur (32) durch die flache Seite jedes ihrer Profile des lateralen Randes (11) und (12) zu ruhen und dass diese auf der Höhe der Öffnungen durch die sich drehenden oder sonstigen Riegel verriegelt werden und dass anschließend die Stützen (4) und der Sattelanhänger (2) in allen Richtungen gemäß den geltenden Bestimmungen verriegelt werden und dass anschließend die Gabel (6) aus der Traverse (1) durch eine Vorwärtsbewegung des Hubwagens (5) freigesetzt wird, wobei dieser für eine neue Ladeoperation verfügbar wird.

## Claims

1. A supporting cross-member (1) that can be removed and manipulated by a handling device for loading, unloading and securing a semi-trailer (2) onto a fixed, removable or movable supporting railway structure (42) on a rail transport car (3), said supporting cross-member (1) comprising a body and a reception support of the fifth wheel (18) type adapted to receive the kingpin (48) of the semi-trailer (2) and to ensure that it is maintained during manipulation and rail transport, said cross-member (1) comprising a mechanical gripping interface (26, 27, 28, 29) so it can be manipulated by a handling device (5), and comprising:
. a generally flat body formed of a metal base structure supporting a fifth wheel (18) that can be raised,
. a mechanism for raising the position of the fifth wheel (18) relative to the body of the cross-member (1),
. a means for locking the fifth wheel in position relative to the body of the cross-member (1),
. at least one means (30, 31, 32, 33) for immobilizing or retaining the cross-member (1) on the supporting railway structure (42),
**characterized in that** the cross-member comprises:
. a lateral edge (11, 12) located on either side of the cross-member (1) used as a contact means on the longitudinal side elements of the supporting railway structure (42).

2. A supporting cross-member (1) according to claim 1 **characterized in that** the metal structure is formed of flanged portions or a mechanically soldered frame with a generally rectangular perimeter.

3. A supporting cross-member (1) according to claim 2 **characterized in that** its body comprises a long rectilinear rear side (7) and a front side with a straight central segment (8) extending on either side into an oblique segment (9, 10), each rejoining a flat lateral edge portion (11, 12).

4. A supporting cross-member (1) according to claim 3 **characterized in that** the long rear side (7) and the front side (8, 9, 10) are made of portions with a C-shaped section and **in that** the flat lateral edge portions (11, 12) have an inverted L-shaped section.

5. A supporting cross-member (1) according to any one of the preceding claims **characterized in that** it further comprises two interior rigidifying portions (15, 16) that define a central space (17) for the fifth wheel (18).

6. A supporting cross-member (1) according to claim 1 or 5 **characterized in that** the fifth wheel (18) pivots on a horizontal transverse axle and it is attached to two inclined levers or rods (19, 20) forming part of the lifting mechanism for the fifth wheel.

7. A supporting cross-member (1) according to any one of the preceding claims **characterized in that** the fifth wheel (18) comprises a contact surface (22) that begins with two inclined ramps (23, 24) defining a V-shaped entry zone (25) between them for the kingpin (48) of the semi-trailer (2).

8. A supporting cross-member (1) according to any one of the preceding claims **characterized in that** the mechanical gripping interface is a series of openings (26, 27, 28, 29) compatible with the fork (6) of a forklift (5) or an assembly of rings or other recovery elements compatible with the cargo slings of a crane or the gripping devices on a cargo beam.

9. A supporting cross-member (1) according to any one of the preceding claims **characterized in that** the positioning mechanism for raising the fifth wheel (18) may be actuated either by an operator or by using the handling device.

10. A supporting cross-member (1) according to any one of the preceding claims **characterized in that** the positioning mechanism for raising the fifth wheel (18) is locked either automatically or by a lock actuated using a handle (21) to recover the vertical force originating from the semi-trailer (2) when its kingpin (48) is engaged in the fifth wheel (18).

11. A supporting cross-member (1) according to claim 1 **characterized in that** at least one immobilizing means is a blocking means.

12. A supporting cross-member (1) according to claim 1 **characterized in that** it comprises a means for centering the body of the cross-member on the rail car.

13. A supporting cross-member (1) according to claim 1 **characterized in that** the lateral edges (11, 12) is a contact means on the upper portion (38, 39) of the longitudinal side elements of the supporting railway structure (42).

14. A supporting cross-member (1) according to the preceding claim **characterized in that** the lateral edge (11, 12) is a portion (12, 13) with an inverse L-shaped section constituting a right angle wedge with a flat contact edge (13, 14).

15. A supporting cross-member (1) according to any one of the preceding claims **characterized in that** the means for immobilizing or retaining the cross-member (1) on the supporting railway structure (42) comprises an assembly of immobilizing or retention openings (30, 31, 32, 33), rings, immobilizing cavities, projections, pins, fingers, hooks or projecting immobilization structures able to cooperate with complementary structures on the supporting railway structure (42).

16. A supporting cross-member (1) according to any one of the preceding claims **characterized in that** it comprises a means for locking the cross-member (1) onto the supporting railway structure (42) which completes the immobilization or retention means (30, 31, 32, 33).

17. A supporting cross-member (1) according to claim 16 **characterized in that** the locking means comprises one or more twisting or bolt locks.

18. A method for loading a semi-trailer onto a rail car using the means according to any one of the above claims **characterized in that** the semi-trailer (2), once separated from its towing vehicle and waiting in a parking area to be loaded, its front portion resting on its support posts (4), the supporting cross-member (1) having been brought from another loading operation or from its storage area, is positioned on the ground or already gripped by the fork of a chariot or forklift (5) or other handling device which raises the cross-member (1) by engaging the arms of its fork (6) in the front openings (26) and (27) and then the rear openings (28) and (29) of the cross-member (1); **in that** the device carries it to the height adapted for attachment to the kingpin (48); **in that** the operator regulates either manually or by actuating the forked lifting element (6) of the forklift (5) the height of the cross-member (1) relative to the ground, or the distance between the body of the cross-member (1) and the fifth wheel (18) so as to obtain the correct and necessary distance for the semi-trailer (2) to be located approximately horizontally in its transport position in the rail car (3) provided for this purpose; and **in that** this regulation takes place by acting on the lifting mechanism of the fifth wheel (18) that exists between the fifth wheel (18) and the cross-member (1); and **in that** the front of the semi-trailer (2) is raised to free the supports (4) from contact with the ground; **in that** the semi-trailer (2) is pulled by the forklift (5) and its rear portion placed facing the extremity of the supporting structure (42) of the rail car (3) while the rail car (3) is in the open position in which it moves backwards when pushed by the forklift (5); **in that** once it reaches the indexes and contacts a stop block on each upper edge (38) and (39) of the longitudinal side elements (40) and (41) of the supporting railway structure (42), the supporting cross-member (1) is centered so that its immobilizing openings (30) through (33) are facing the immobilizing projections (34) through (37) on the supporting railway structure (42); **in that** a very slight downward motion allows the cross-member (1) to rest against the upper edges (38) and (39) of the supporting railway structure (42) on the flat area of each of its lateral edge portions (11) and (12) and it is locked in the area of the openings using twisting or other type of locks; and that next the support posts (4) are released and the semi-trailer (2) is locked in all directions in accordance with regulations in effect; and that next the fork (6) is disconnected from the cross-member (1) when the forklift (5) moves forward, thus becoming available for another loading operation.
